# EUROPEAN PATENT SPECIFICATION

(11) **EP 3 510 207 B1**
(45) Date of publication and mention of the grant of the patent: **07.08.2024**
(21) Application number: 17761851.9
(22) Date of filing: 29.08.2017
(51) Int. Cl.: E03F 5/02, E03F 3/04, F16L 41/03

(54) **AN ARRANGEMENT FOR A SEWERAGE SYSTEM COMPRISING A FRENCH DRAIN**
VORRICHTUNG FÜR DRAINAGEVORRICHTUNG UMFASSEND EINE FRANZÖSISCHE DRAINAGELEITUNG
DISPOSITIF POUR UNE SYSTÈME DE DRAINAGE COMPRENANT UN DRAINAGE FRANÇAIS.

(30) Priority: 06.09.2016 FI 20165660
(43) Date of publication of application: 17.07.2019
(73) Proprietor: HYBRID SYSTEM OÜ, 10129 Tallinn (EE)
(72) Inventor: KINNUNEN, Petteri, 01900 Nurmijärvi (FI)
(74) Representative: AAA Patendibüroo OÜ
(86) International application number: PCT/EP2017/071623
(87) International publication number: WO 2018/046348

(56) References cited:
- EP-A1- 0 038 255
- DE-U1- 202010 001 051
- DE-U1- 202014 000 333
- GB-A- 965 831

## Description

### Technical field

Generally, the invention relates to an arrangement for connecting a first drain system, such as a rainwater drain system, and a French drain system.

### Background technology

French drains are commonly used to channel water away from a house and a garden in order to prevent ground water from penetrating or damaging building foundations. Digging an excavation and installing French drains has to be performed carefully, because malfunctions of the drains and repairing them might be laborious and can become expensive. Inspections wells are assembled in connection to the French drain system for inspecting the condition of the drains and purifying them.

In addition to ground water, also rainwater and meltwater (hereafter also referred as "rainwater"), for example, have to be guided away from roofs and yards. However, rainwater, as such, cannot be channeled to a French drain, but it needs its own drainage system, which is typically dug into the ground.

Naturally, suitable arrangement for both French drains and rainwater drains, as well as another sewerage, such as wastewater drain systems, has to be made in a building construction. Typically, trenches are dug in a building construction for sewerage systems; one for French drain and the other for rainwater drain. A French drain usually requires deeper trench than a rainwater drain. Afterwards, the trenches are filled with gravel. Naturally, digging trenches is a laborious procedure; it may require some suitable machine, like an excavator, a digger or a power shovel. Digging takes time and it may be a pricey project.

In addition, all trenches require space from the yard. So, the trenches cannot be dug wherever, but the places for different drains in the yard have to be considered while planning by taking into account the places for other drains. The result may not be the simplest drain, but a solution defined by an available space.

German utility model publication DE202010001051U1 relates to a sewer well, which is a combination well with an open sewer pipe and a closed sewer pipe, from which a riser pipe which can be water-tightly closed by means of a cover branches off. The dirty water is guided through the shaft in an open gutter, while the rainwater is discharged through a closed pipe, for example a plastic pipe. Although said well enables access to two separate drainage systems, the lower drainage system is not sealed off from the drainage system above for preventing unwanted water from entering into the lower drainage system (for example French drain). The lower drainage system inside the well is basically an open gutter having a drawback that it is not protect from possible spills from the drainage system above.

### Summary of the invention

It is an object of the present invention to implement such a solution, that previously mentioned drawbacks of the prior art could be diminished. In particular, the invention is implied to solve how to arrange a French drain and another drain, such as a rainwater drain, one upon each other.

The objective of the invention is met by the features disclosed in the independent claim 1.

According to an embodiment of the invention, the arrangement comprises an inspection well device suitable to be connected between a first drain system and a French drain system for enabling installation of said French drain at least partly under of said first drain.

Using the inspection well device according to the present invention a French drain may be installed completely or partly under another drain. The other drain system can be e.g. a rainwater drain system or a wastewater drain system, for example. The invention is described by using a rainwater drain system as an example, but the person skilled in the art will understand that the invention in question is not limited to the rainwater drain system.

The present invention may enable that pipelines can be installed to the ground so that in suitable parts of the pipelines can be set one upon the other. Also, inspection wells of the rainwater drain and French drain systems may be able to combine with the inspection well device. However, the inspection well device may ensure that the rainwater drain and French drain systems remain as separate systems.

In an embodiment, the inspection well device comprises closing means, such as an openable cap, for preventing unwanted water from entering into the French drain. Using closing means is preferable, because in that way it can be possible to prevent rainwater and any dirties from entering into the French drain. However, the openable cap, for example, enables inspecting and purifying of the French drain.

The arrangement comprises an inspection well, so that said inspection well device is arranged at least a partly inside to said inspection well. This may enable the inspection well device to be connected with some commercially available rainwater drain system comprising an inspection well, for example. The inspection well device is set at least partially inside the rainwater drain inspection well in question, so that inspection and purification of the French drain can be performed through the rainwater drain inspection well, for example.

The inspection well, inside which said inspection well device is at least partially arranged, enables manufacturing of a system, which can be ready to be installed with French and rainwater drain systems, for example. Yet, the arrangement further comprises a French drain inspection well connectible to a French drain system. These together provide an arrangement that is ready to be installed to French drain pipelines and another drain pipelines, such as rainwater drain pipelines.

The arrangement further comprises a number of outlets in connection of said drain inspection well of said first drain system for pipelines, and the outlets in connection of said inspection well of said first drain system are arranged in different heights. This enables more outlets to be arranged in the rainwater drain inspection well.

Preferably, a height of said inspection well device inside of said inspection well is selected in relation to said outlet(s) to be at least in the middle of a highest outlet. This may prevent unwanted water, such as rainwater, to flow into the French drain, when opening a possible cap at the top of the inspection well device or when arrange the inspection well device in connection with the rainwater drain without a closing means.

Some preferable embodiments of the invention are described in the dependent claims.

Significant advantages can be achieved with the present invention when compared to the prior art solution. The arrangement according to the present invention can save money and time, because assembling both French drain and rainwater drain may be possible to perform at least partially to the same trench one upon the other, which may diminish work phases and reduce used materials.

In addition, the required space for assembling various drains may be diminished due to the present invention, which may ease the designing process of sewerage systems and simplify the drawing of drains.

The invention in question might also enable faster assembling in action comparing to digging and filling trenches both to a French drain and a rainwater drain. Time and money savings may be gained by preparing only one trench with freezing preventing system both drainage systems in the same trench.

The arrangement of the present invention may still enable inspection and cleaning of the French drain through the rainwater drain inspection well, which can make it easy to perform and save space in a yard by combining two inspection wells into a one.

In the present document, the term "sewerage" has been used widely comprising rainwater drains, French drains and several kinds of wastewater drains, with commonly used inspection wells and manholes, for example. Though the invention is described to be used to connect a rainwater drain system and a French drain system, it can be applied to other drain systems connecting a wastewater drain system and a French drain system, for example.

In the present document, the term "inspection well", is used widely referring to inspection wells, manholes, septic tanks and other wells enabling maintenance, for example.

The expression "a number of" refers herein to any positive integer starting from one (1), e.g. to one, two, or three.

### Short description of the drawings

Next, the invention is described in more detail with reference to the appended drawings, in which
- Fig. 1: is a perspective view with a cut away portion of the side of an embodiment of the invention,

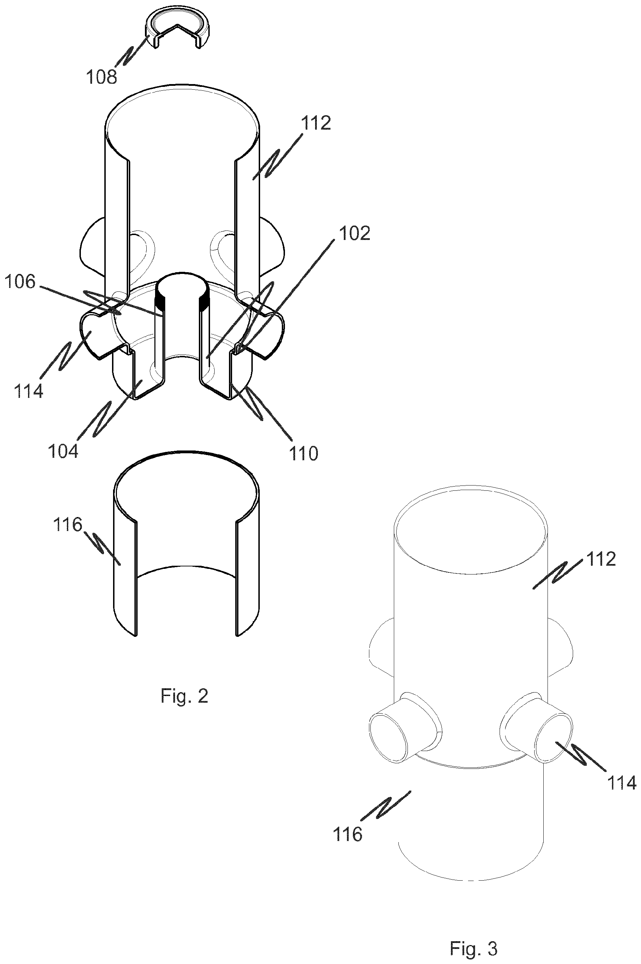

- Fig. 2: is an exploded view of the embodiment of the invention shown in Fig. 1,
- Fig. 3: is perspective view of the embodiment of the invention shown in Fig. 1.

### Detailed description of the embodiments

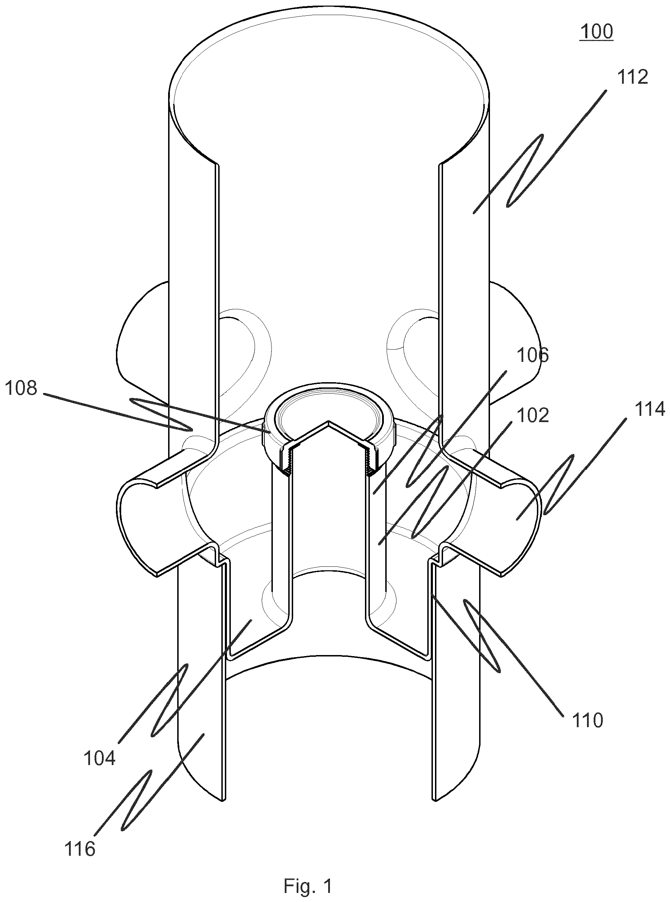

In Fig. 1 it is shown a perspective view with a cut away portion of the side of an embodiment of the invention. An arrangement 100 for a sewerage system comprising a French drain according to the present invention comprises an inspection well device 102 suitable to be connected between a French drainage system and another drain system, such as a rainwater drain system, for enabling installation of said French drain at least partly under the another drain.

The inspection well device 102 comprises a bottom part 104, which is closed preventing unwanted water and dirties, such as rainwater from entering into the French drain, and a tube part 106 protruding from the bottom part 104. The top of the tube part 106 is open enabling inspection and purification of the French drain via the tube part 106.

The size and material of the inspection well device 102 can vary widely. The diameter of the inspection well device is preferably e.g. about 100 mm - 600 mm, more preferably e.g. about 250 mm - 280 mm to be compatible for commonly used pipelines. The height of the inspection well device is preferably e.g. about 10 mm - 250 mm, more preferably e.g. about 15 mm - 200 mm, but if required, the tube part can be in the same level with the bottom part having no height at all, or the tube part can be as high as required. The skilled person however knows that the height as well as the diameter of inspection well device can easily be selected to be what is needed.

The tube part is selected to protruding so high in a rainwater drain inspection well 112 that rainwater is not able to flow into the French drain.

The tube part 106, in the embodiment in question, reaches higher level than any outlets 114 for pipelines in the rainwater drain inspection well 112.

In an embodiment, the inspection well device 102 comprises closing means, such as an openable cap 108, for preventing unwanted water, such as rainwater, from entering into the French drain. The cap 108 as well as the corresponding top of the tube part can be threaded enabling easy opening and closing of the cap 108. In connection of the cap 108 can also be arranged suitable insulation. In the embodiment in question, the height of the tube part 106 is selected so, that when cap 108 is opened, rainwater from the rainwater drain does not flow in, being higher than the middle part of the highest outlet, for example.

Depending on embodiment, the inspection well device 102 can be connected to a rainwater drain, a rainwater drain inspection well and French drain inspection well. Preferably, the bottom part 104 comprises sleeves 110, which enables the connections of the inspection well device 102.

The arrangement according to the present invention further comprises a rainwater drain inspection well 112. The inspection well device 102 is arranged inside of the rainwater drain inspection well 112, so that the bottom part 104 and the tube part 106 are inside of the rainwater drain inspection well 112. The rainwater drain inspection well 112 is arranged to be formed to be continuing from the sleeves 110, or to be connected to the sleeves 110.

When the inspection well device 102 according to the present invention is connected to a rainwater drain inspection well, the inspection well device 102 is arranged to be at least a partly inside to the rainwater drain inspection well. However, the sleeves 106 can also be arrange outside of the rainwater drain inspection well.

The rainwater drain inspection well 112 comprises a number of outlets 114 for rainwater pipelines. The number of outlets can vary, but preferably the number of the outlets is 1-4. However, more outlets can be formed to the rainwater drain inspection well 112 or the rainwater drain inspection well 112 can be formed without outlets. The outlets 114 in the rainwater drain inspection well 112 are arranged in different heights. Preferably, the number of outlets can easily be higher than 4.

Preferably, the height of the inspection well device 102 inside of a rainwater drain inspection well 112 is selected so that the inspection well device 102, i.e. the tube part 106, inside the rainwater drain inspection well 112 is higher than the middle point of the a highest outlet.

The arrangement according to the present invention further comprises a French drain inspection well 116 connectible to a French drain system.

The French drain inspection well 116 can be connected to the sleeves 110, for example, or arranged to be in connection with the inspection well device 102 by some other means.

## Claims

1. An arrangement (100) for connecting a first drain system, such as a rainwater drain system, and a French drain system, the arrangement (100) comprising:
an inspection well device (102) suitable to be connected between the first drain system and the French drain system for enabling, in an installed state of the arrangement, the installation of said French drain system at least partly under said first drain system,so that said first drain system and said French drain system remain as separate systems,
said arrangement (100) further comprising a French drain inspection well (116) connectible to said French drain system, wherein said inspection well device (102) comprising:
a bottom part (104) for preventing unwanted water and dirties from entering into said French drain,
wherein
the arrangement (100) further comprising an inspection well (112), and
a number of outlets (114) formed to the inspection well (112) for connection to pipelines of the first drain system,
said inspection well device (102) further comprising a tube part (106) protruding from said bottom part (104) for, in an installed state of the arrangement (100), inspecting and cleaning said French drain, wherein the height of the tube part (106) is selected to be higher than any of the outlets (114), wherein said outlets (114) are arranged in different heights,
wherein said inspection well device (102) is arranged inside an inspection well (112), wherein at least said bottom part (104) and at least said tube part (106) are arranged at least partly inside said inspection well (112).

2. An arrangement (100) according to Claim 1, wherein said inspection well device (102) comprises closing means, such as an openable cap (108), at the top of said tube part (106) for preventing unwanted water from entering into the French drain.

## Patentansprüche

1. Anordnung (100) zum Verbinden eines ersten Abflusssystems, wie etwa eines Regenwasserabflusssystems, und eines Sickerleitungssystems, wobei die Anordnung (100) Folgendes umfasst:
eine Inspektionsschachtvorrichtung (102), die geeignet ist, zwischen dem ersten Abflusssystem und dem Sickerleitungssystem angeschlossen zu werden, um in einem installierten Zustand der Anordnung die Installation des Sickerleitungssystems zumindest teilweise unter dem ersten Abflusssystem zu ermöglichen, so dass das erste Abflusssystem und das Sickerleitungssystem getrennte Systeme bleiben,
wobei die Anordnung (100) weiter einen an das Sickerleitungssystem anschließbaren Sickerleitungsinspektionsschacht (116) umfasst, wobei die Inspektionsschachtvorrichtung (102) umfasst:
ein Bodenteil (104), das Eindringen von unerwünschtem Wasser und Schmutz in die Sickerleitung verhindert,
wobei die Anordnung (100) weiter einen Inspektionsschacht (112) und eine Anzahl von Auslässen (114) umfasst, die an dem Inspektionsschacht (112) zum Anschluss an Rohrleitungen des ersten Abflusssystems ausgebildet sind,
wobei die Inspektionsschachtvorrichtung (102) weiter ein Rohrteil (106) umfasst, das aus dem Bodenteil (104) herausragt, um in einem installierten Zustand der Anordnung (100) die Sickerleitung zu inspizieren und zu reinigen, wobei die Höhe des Rohrteils (106) so gewählt ist, dass sie höher ist als jeder der Auslässe (114), wobei die Auslässe (114) in unterschiedlichen Höhen angeordnet sind,
wobei die Inspektionsschachtvorrichtung (102) in einem Inspektionsschacht (112) angeordnet ist, wobei zumindest das Bodenteil (104) und zumindest das Rohrteil (106) zumindest teilweise in dem Inspektionsschacht (112) angeordnet sind.

2. Anordnung (100) nach Anspruch 1, wobei die Inspektionsschachtvorrichtung (102) Verschlussmittel, wie etwa eine zu öffnende Kappe (108), an der Oberseite des Rohrteils (106) umfasst, um zu verhindern, dass unerwünschtes Wasser in die Sickerleitung eindringt.

## Revendications

1. Agencement (100) pour connecter un premier système de drain, tel qu'un système de drain d'eaux de pluie, et un système de drain à pierres sèches, l'agencement (100) comprenant :
un dispositif de puits d'inspection (102) adapté pour être connecté entre le premier système de drain et le système de drain à pierres sèches afin de permettre, dans un état installé de l'agencement, l'installation dudit système de drain à pierres sèches au moins en partie sous ledit premier système de drain, de sorte que ledit premier système de drain et ledit système de drain à pierres sèches restent des systèmes distincts,
ledit agencement (100) comprend en outre un puits d'inspection de drain à pierres sèches (116) pouvant être connecté audit système de drain à pierres sèches, dans lequel ledit dispositif de puits d'inspection (102) comprend :
une partie inférieure (104) pour empêcher de l'eau et des saletés indésirables de pénétrer dans ledit drain à pierres sèches,
dans lequel l'agencement (100) comprend en outre un puits d'inspection (112), et un certain nombre de sorties (114) formées vers le puits d'inspection (112) pour une connexion à des canalisations du premier système de drain,
ledit dispositif de puits d'inspection (102) comprenant en outre une partie de tube (106) faisant saillie depuis ladite partie inférieure (104) pour, dans un état installé de l'agencement (100), inspecter et nettoyer ledit drain à pierres sèches, dans lequel la hauteur de la partie de tube (106) est choisie pour être plus haute que l'une quelconque des sorties (114), dans lequel lesdites sorties (114) sont agencées à différentes hauteurs,
dans lequel ledit dispositif de puits d'inspection (102) est agencé à l'intérieur d'un puits d'inspection (112), dans lequel au moins ladite partie inférieure (104) et au moins ladite partie de tube (106) sont agencées au moins en partie à l'intérieur dudit puits d'inspection (112).

2. Agencement (100) selon la revendication 1, dans lequel ledit dispositif de puits d'inspection (102) comprend des moyens de fermeture, tels qu'un capuchon ouvrable (108), au sommet de ladite partie de tube (106) pour empêcher de l'eau indésirable d'entrer dans le drain à pierres sèches.
